# EUROPÄISCHE PATENTSCHRIFT

(11) **EP 2 735 039 B1**
(45) Veröffentlichungstag und Bekanntmachung des Hinweises auf die Patenterteilung: **12.04.2017**
(21) Anmeldenummer: 12791104.8
(22) Anmeldetag: 23.11.2012
(51) Int. Cl.: H01M 2/10

(54) **ZELLKONTAKTIERANORDNUNG FÜR EINEN ENERGIESPEICHER**
CELL CONTACTING ARRANGEMENT FOR AN ENERGY STORE
SYSTÈME DE MISE EN CONTACT ÉLECTRIQUE DES ÉLÉMENTS D'UN ACCUMULATEUR D'ÉNERGIE

(30) Priorität: 24.11.2011 DE 102011087035
(43) Veröffentlichungstag der Anmeldung: 28.05.2014
(73) Patentinhaber: Bayerische Motoren Werke Aktiengesellschaft, 80809 München (DE); Diehl Metal Applications GmbH, 14167 Berlin (DE)
(72) Erfinder: GOESMANN, Hubertus, 89564 Auernheim (DE); BORN, Christoph, 80935 München (DE); HECK, Harald, 90455 Nürnberg (DE); WARMUTH, Frank, 14469 Potsdam (DE)
(74) Vertreter: Hoefer & Partner Patentanwälte mbB
(86) Internationale Anmeldenummer: PCT/EP2012/004861
(87) Internationale Veröffentlichungsnummer: WO 2013/075843

(56) Entgegenhaltungen:
- WO-A1-2011/038908
- DE-A1-102008 034 854
- DE-A1-102008 034 871
- DE-A1-102008 034 876

## Beschreibung

Die Erfindung betrifft eine Zellkontaktieranordnung für ein Energiespeichermodul mit mehreren elektrochemischen Speicherzellen. Des Weiteren betrifft die Erfindung einen Hochvoltspeicher umfassend ein Energiespeichermodul und die Zellkontaktieranordnung.

In einem üblicherweise als Batterie bezeichneten Hochvoltspeicher zur Spannungsversorgung eines Kraftfahrzeugs kommen Energiespeichermodule zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten Speicherzellen. Die einzelnen Speicherzellen enthalten elektrochemische Zellen der Batterie. Der Stapel aus den einzelnen Speicherzellen wird zumeist verspannt. Die Verspannung dient neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Die mehreren Speicherzellen der Energiespeichermodule müssen untereinander elektrisch mit Zellverbindern verbunden werden.

WO2011/038908A1 offenbart eine Einrichtung zum elektrischen Zusammenschalten von Zellen eines Batteriepacks mittels Zellverbindern, dadurch gekennzeichnet, dass auf einer Montageplatte elektrisch gegeneinander isoliert mehrere Zellverbinder zur Verbindung zumindest zweier Zellpole angebracht sind.
DE102008034876A1 offenbart eine Batterie mit einer in einem Batteriegehäuse angeordneten Wärmeleitplatte zum Temperieren der Batterie, wobei mehrere mittels einer Zellverbinderplatine elektrisch parallel und/oder seriell miteinander verschaltete Einzelzellen wärmeleitend mit der Wärmeleitplatte verbunden sind. Die Zellverbinderplatine umfasst dabei mehrere Zellverbinder, welche vorzugsweise in zu diesen korrespondierenden Aussparungen versenkt angeordnet sind.
Es ist Aufgabe der vorliegenden Erfindung, eine Zellkontaktieranordnung für ein Energiespeichermodul anzugeben, die bei kostengünstiger Herstellung und Montage einen flexiblen und modularen Aufbau aufweist und ein sicheres Kontaktieren der Speicherzellen ermöglicht.

Die Aufgabe wird gelöst durch die Merkmale der unabhängigen Ansprüche. Die abhängigen Ansprüche haben bevorzugte Weiterbildungen der Erfindung zum Gegenstand.

Somit wird die Aufgabe gelöst durch eine Zellkontaktieranordnung für ein Energiespeichermodul mit mehreren elektrochemischen Speicherzellen, wobei jede Speicherzelle zumindest zwei elektrische Anschlussterminals aufweist. Die Zellkontaktieranordnung umfasst eine auf das Energiespeichermodul aufsetzbare Trägerplatte und zumindest einen in die Trägerplatte eingesetzten Zellverbinder. Der Zellverbinder dient zum Verbinden von zumindest zwei der Anschlussterminals unterschiedlicher Speicherzellen. Bei einer Reihenschaltung der Speicherzellen wird beispielsweise mit dem Zellverbinder ein Pluspol einer ersten Speicherzelle mit einem Minuspol einer weiteren Speicherzelle verbunden. Alternativ dazu kann der Zellverbinder auch die Speicherzellen in einer Parallelschaltung verbinden. Darüber hinaus können mit einem Zellverbinder auch mehr als zwei Anschlussterminals unterschiedlicher Speicherzellen miteinander verbunden werden. Erfindungsgemäß umfasst die Trägerplatte zumindest eine Schnappfeder mit einer Rastnase. Die Schnappfeder mit der Rastnase dient zum Fixieren des Zellverbinders in der Trägerplatte. Durch die Rastnase ist der Zellverbinder in der Trägerplatte an einer bestimmten Position fixiert. Die Schnappfeder ermöglicht eine eingeschränkte Bewegung des Zellverbinders. Dies ist beispielsweise beim Verschweißen des Zellverbinders mit den Anschlussterminals notwendig, da sich hierbei der Zellverbinder aufgrund der Erwärmung ausdehnt. Auch im Betrieb des Energiespeichermoduls kann es zur Erwärmung des Zellverbinders und somit zu einer Ausdehnung des Zellverbinders kommen. Die Verwendung der Schnappfeder mit Rastnase ermöglicht somit zum Einen eine spielfreie Positionierung des Zellverbinders und vermeidet zum anderen eine Verspannung des Zellverbinders innerhalb der Trägerplatte. Bevorzugt wird die Trägerplatte aus Kunststoff, insbesondere als Spritzgussteil, gefertigt. Die Zellverbinder bestehen bevorzugt aus Metall, insbesondere Aluminium. Dadurch kann die Zellkontaktieranordnung ohne weitere Zusatzstoffe sehr günstig und schnell gefertigt werden. Die Trägerplatte ermöglicht insbesondere eine Vormontage der Zellverbinder. Die Zellverbinder sind in der Trägerplatte an bestimmten Positionen positioniert, so dass durch Aufsetzen der Trägerplatte auf das Energiespeichermodul die Zellverbinder an der korrekten Stelle sitzen und direkt mit den Anschlussterminals der Speicherzellen verbunden, insbesondere verschweißt oder verlötet werden können.

In bevorzugter Ausführung ist vorgesehen, dass die Schnappfeder und die Rastnase integral mit der Trägerplatte gefertigt sind. Die Trägerplatte, die Schnappfeder und die Rastnase sind somit ein Spritzgussteil, das mit einer gemeinsamen Spritzgussform gefertigt wurde.

Des Weiteren ist bevorzugt pro Anschlussterminal, das vom Zellverbinder kontaktiert ist, eine Schnappfeder mit einer Rastnase vorgesehen. Verbindet ein Zellverbinder also zwei Anschlussterminals, so sind für diesen Zellverbinder zwei Schnappfedern mit jeweils einer Rastnase vorgesehen.

In besonders bevorzugter Ausführung ist die Schnappfeder bogenförmig ausgestaltet. Ein erstes Ende dieser Bogenform ist mit der Trägerplatte verbunden. An einem zweiten Ende der Bogenform ist die Rastnase angeordnet. Durch diese Bogenform kann die Schnappfeder auf eine sehr einfache Weise als Kunststoffteil ausgestaltet werden.
Des Weiteren ist bevorzugt vorgesehen, dass der Zellverbinder an der der Schnappfeder gegenüberliegenden Seite unter einen Absatz der Trägerplatte geschoben wird. Bei der Montage wird zunächst der Zellverbinder unter diesen Absatz geschoben. Daraufhin wird die noch freie Seite des Zellverbinders unter die Rastnase eingeschnappt. Dadurch ist der Zellverbinder auf zwei gegenüberliegenden Seiten in der Trägerplatte fixiert.

Bevorzugt weist der Zellverbinder Anschlussflächen auf, die zur Verbindung mit den Anschlussterminals ausgebildet sind. Wird der Zellverbinder beispielsweise zum Kontaktieren von zwei Anschlussterminals benutzt, so umfasst dieser Zellverbinder auch zwei Anschlussflächen. Diese Anschlussflächen kommen bei der Montage auf den Anschlussterminals zu liegen und können mit den Anschlussterminals verschweißt oder verlötet werden.

Bevorzugt ist die Rastnase derart angeordnet, dass sie eine Bewegung des Zellverbinders in einer ersten Richtung blockiert. Die Schnappfeder ist dabei so angeordnet, dass sie eine federbelastete Bewegung des Zellverbinders in einer zur ersten Richtung senkrechten zweiten Richtung zulässt. Im Energiespeichermodul sind die einzelnen Speicherzellen insbesondere so angeordnet, dass die einzelnen Anschlussterminals alle zu einer Oberfläche hin gerichtet sind. Die erste Richtung erstreckt sich insbesondere senkrecht zu dieser Oberfläche. Die Rastnase blockiert also ein Abheben der Zellverbinder von dieser Oberfläche des Energiespeichermoduls. Die zweite Richtung ist parallel zu dieser Oberfläche der Anschlussterminals ausgerichtet. Somit ermöglicht die Schnappfeder eine eingeschränkte, federbelastete Bewegung des Zellverbinders parallel zur Oberfläche des Energiespeichermoduls. Die Anschlussflächen der Zellverbinder sind insbesondere als Platte bzw. plattenförmig ausgestaltet. Dies bedeutet, dass sich die Anschlussflächen im Wesentlichen in einer Ebene erstrecken. Diese Ebene ist parallel zu der Oberfläche, an der die Anschlussterminals des Energiespeichermoduls liegen. Die oben genannte zweite Richtung erstreckt sich senkrecht zur Richtung der Dicke dieser Platte. Beim Verschweißen oder Verlöten des Zellverbinders mit den Anschlussterminals oder bei einer Erwärmung der Zellverbinder während des Betriebes des Energiespeichermoduls dehnt sich der Zellverbinder aus. In erster Linie dehnt sich der Zellverbinder dabei in den Richtungen senkrecht zur Dicke der Platte. Deshalb ermöglicht die Schnappfeder eine beschränkte, federbelastete Bewegung des Zellverbinders in der zweiten Richtung, welche senkrecht zur Richtung der Dicke der Platte ausgerichtet ist.

In einer weiteren vorteilhaften Ausgestaltung ist vorgesehen, dass die Anschlussflächen des Zellverbinders für die zu verbindenden Anschlussterminals hintereinander in einer dritten Richtung angeordnet sind. Diese dritte Richtung steht senkrecht zur zweiten Richtung. Um nun auch eine Ausdehnung des Zellverbinders in dieser dritten Richtung zu ermöglichen, umfasst der Zellverbinder zwischen zwei Anschlussflächen einen Verbindungsbogen zum Ausgleich von Eigenspannungen im Zellverbinder.

Der Zellverbinder ist also in den Bereichen, in denen er mit den Anschlussterminals verbunden wird, plattenförmig ausgestaltet. Zwischen diesen Bereichen ist der Verbindungsbogen angeordnet. Der Zellverbinder wird insbesondere als Stanzbiegeblechteil hergestellt.

Die Erfindung umfasst des Weiteren einen Hochvoltspeicher zur Spannungsversorgung, insbesondere eines Kraftfahrzeugs, umfassend ein Energiespeichermodul und eine der soeben beschriebenen Zellkontaktieranordnungen. Das Energiespeichermodul umfasst mehrere elektrochemische Speicherzellen. Jede der Speicherzellen umfasst zumindest zwei elektrische Anschlussterminals. Die im Rahmen der erfindungsgemäßen Zellkontaktieranordnung vorgestellten Ausgestaltungen finden entsprechend vorteilhafte Anwendung auf den erfindungsgemäßen Hochvoltspeicher.

Im Folgenden wird ein Ausführungsbeispiel der Erfindung anhand der begleitenden Zeichnung genauer erläutert. Dabei zeigt:
- Figur 1: ein Energiespeichermodul, auf das eine erfindungsgemäße Zellkontaktieranordnung gemäß einem Ausführungsbeispiel aufsetzbar ist,
- Figur 2: eine erfindungsgemäße Zellkontaktieranordnung gemäß dem Ausführungsbeispiel, und
- Figur 3: eine Detaildarstellung der erfindungsgemäßen Zellkontaktieranordnung gemäß dem Ausführungsbeispiel.

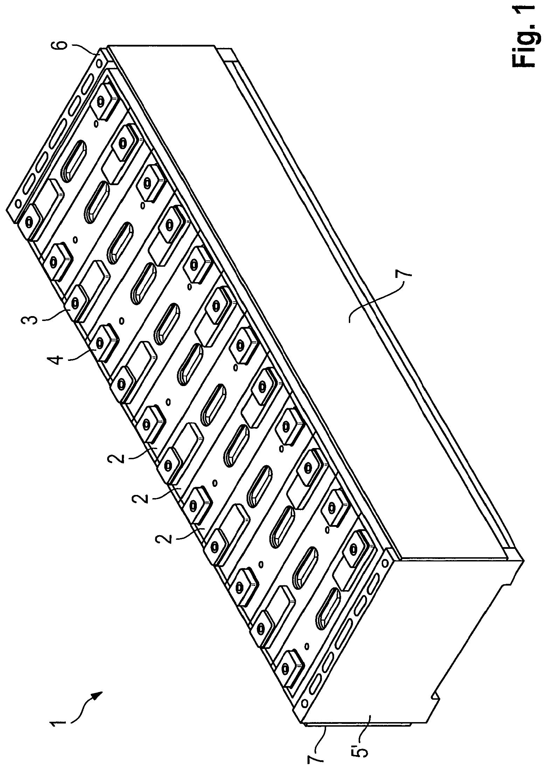

Im Folgenden wird ein Ausführungsbeispiel der Erfindung anhand der Figuren 1 bis 3 genauer erläutert.

Figur 1 zeigt ein Energiespeichermodul 1 ohne die erfindungsgemäße Zellkontaktieranordnung 8. Auf dieses Energiespeichermodul 1 wird die im Folgenden beschriebene Zellkontaktieranordnung 8 aufgesetzt. Das Energiespeichermodul 1 umfasst mehrere, hintereinander in Reihe gestapelte Speicherzellen 2. Jede Speicherzelle 2 umfasst ein erstes Anschlussterminal 3 und ein zweites Anschlussterminal 4. Die einzelnen Speicherzellen 2 sind jeweils versetzt zueinander angeordnet, so dass zwei Anschlussterminals unterschiedlicher Polaritäten nebeneinander zu liegen kommen. Die hintereinander angeordneten Speicherzellen 2 sind über zwei Endplatten 5, 6 und zwei Zuganker 7 miteinander verspannt.

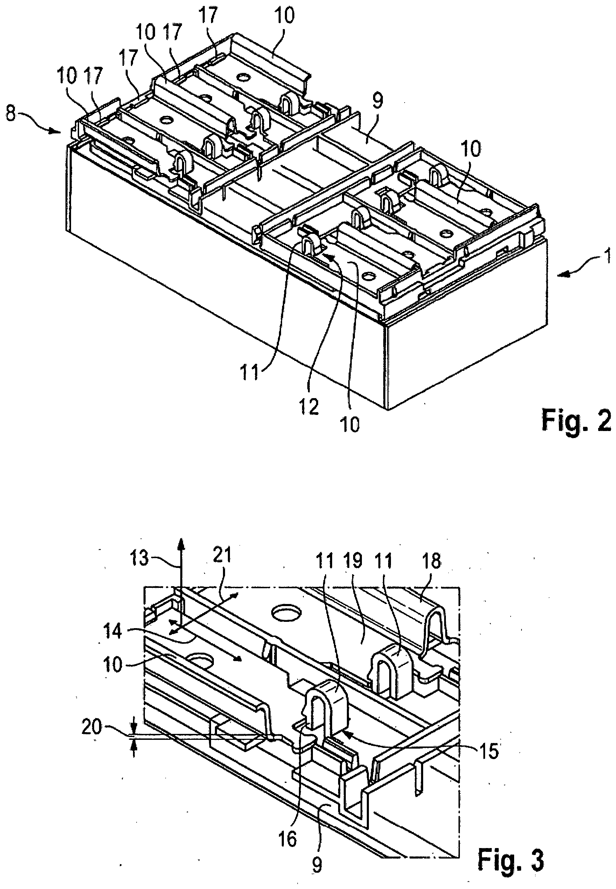

Figur 2 zeigt die erfindungsgemäße Zellkontaktieranordnung 8 aufgesetzt auf das Energiespeichermodul 1. Die Zellkontaktieranordnung 8 umfasst eine Trägerplatte 9, hergestellt als Spritzgussteil aus Kunststoff. In die Trägerplatte 9 sind mehrere Zellverbinder 10, hergestellt aus Aluminium, eingesetzt. Figur 3 zeigt einen Detailausschnitt aus Figur 2. Ein jeder der Zellverbinder 10 umfasst zwei Anschlussflächen 19. Die beiden Anschlussflächen 19 sind über einen Verbindungsbogen 18 des Zellverbinders 10 miteinander verbunden. Die beiden Anschlussflächen 19 kommen jeweils auf einem Anschlussterminal 3, 4 von zwei unterschiedlichen Speicherzellen 2 zu liegen. Auf diesen Anschlussterminals werden die Anschlussflächen 19 verschweißt. Dadurch verbindet im dargestellten Ausführungsbeispiel ein Zellverbinder 10 jeweils zwei Anschlussterminals 3, 4.

Pro Zellverbinder 10 umfasst die Trägerplatte 9 zwei Schnappfedern 11 mit jeweils einer Rastnase 12. Die Schnappfedern 11 und die Rastnasen 12 halten den Zellverbinder 10 jeweils im Bereich der Anschlussflächen 19. Die Schnappfedern 11 mit den Rastnasen 12 sind integral mit der restlichen Trägerplatte 9 aus Kunststoff gefertigt.

Die Schnappfeder 11 ist bogenförmig ausgestaltet. Ein erstes Ende 15 des Bogens ist mit der restlichen Trägerplatte 9 verbunden. An dem zweiten Ende 16 des Bogens ist die Rastnase 12 ausgebildet. Gegenüber der Schnappfeder 11 steckt der Zellverbinder 10 unter einem Absatz 17. Der Absatz 17 ist ebenfalls integraler Bestandteil der Trägerplatte 9. Auf der Unterseite liegt der Zellverbinder 10 auf der Trägerplatte 9 bzw. auf den Anschlussterminals 3, 4 auf.

Wie in Fig. 3 dargestellt ist werden an der Zellkontaktieranordnung 8 drei verschiedene Richtungen definiert. Eine erste Richtung 13 steht senkrecht auf der plattenförmigen Anschlussfläche 19. Eine zweite Richtung 14 steht senkrecht zur ersten Richtung 13 und erstreckt sich parallel zur Oberfläche des Energiespeichermoduls 1. Eine dritte Richtung 21 steht senkrecht zur ersten Richtung 13 und senkrecht zur zweiten Richtung 14. Die Anschlussterminals 3, 4 sind hintereinander in dieser dritten Richtung 21 angeordnet. Die Schnappfeder 11 ist so angeordnet, dass sie eine federbelastete Bewegung des Zellverbinders 10 in der zweiten Richtung 14 zulässt. Die Rastnase 12 blockiert eine Bewegung des Zellverbinders 10 in der ersten Richtung 13. Der Verbindungsbogen 18 zwischen den beiden Anschlussflächen 19 ermöglicht eine gewisse Bewegung bzw. Längenausdehnung des Zellverbinders 10 in der dritten Richtung 21. Des Weiteren zeigt Figur 3 eine Dicke 20 der Anschlussfläche 19 des Zellverbinders 10. Die erste Richtung 13 erstreckt sich parallel zu der Richtung der Dicke 20. Die zweite Richtung 14 und die dritte Richtung 21 sind senkrecht zur Dicke 20 ausgerichtet.

Beim Verschweißen oder Verlöten der Zellverbinder 10 mit den Anschlussterminals 3, 4 sowie im Betrieb des Energiespeichermoduls 1 kommt es zur Erwärmung der Zellverbinder 10 und somit zur Ausdehnung des Materials. Der Verbindungsbogen 18 ermöglicht eine gewisse Ausdehnung des Zellverbinders 10 in der dritten Richtung 21. Die bogenförmig ausgestaltete Schnappfeder 11 ermöglicht eine gewisse Ausdehnung des Zellverbinders 10 in der zweiten Richtung 14.

Mit der erfindungsgemäßen Zellkontaktieranordnung 8 wird sichergestellt, dass die Zellverbinder 10 an einer vorbestimmten Position spielfrei gehalten werden. Gleichzeitig ermöglicht die Trägerplatte 9 jedoch auch eine gewisse Bewegung der Zellverbinder 10 aufgrund von Eigenspannung.

### Bezugszeichenliste

- 1: Energiespeichermodul
- 2: Speicherzellen
- 3,4: Anschlussterminals
- 5,6: Endplatten
- 7: Zuganker
- 8: Zellkontaktieranordnung
- 9: Trägerplatte
- 10: Zellverbinder
- 11: Schnappfeder
- 12: Rastnase
- 13: erste Richtung
- 14: zweite Richtung
- 15: erstes Bogenende
- 16: zweites Bogenende
- 17: Absatz
- 18: Verbindungsbogen
- 19: Anschlussfläche
- 20: Dicke
- 21: dritte Richtung

## Patentansprüche

1. Zellkontaktieranordnung (8) für ein Energiespeichermodul (1) mit mehreren elektrochemischen Speicherzellen (2), wobei jede Speicherzelle (2) zumindest zwei elektrische Anschlussterminals (3 , 4) aufweist, umfassend:
- eine auf das Energiespeichermodul (1) aufsetzbare Trägerplatte (9), und
- zumindest einen in die Trägerplatte (9) eingesetzten Zellverbinder (10) zum Verbinden von zumindest zwei der Anschlussterminals (3, 4) unterschiedlicher Speicherzellen (2),
- wobei die Trägerplatte (9) zumindest eine Schnappfeder (11) mit einer Rastnase (12) zum Fixieren des Zellverbinders (10) in der Trägerplatte (9) umfasst,
**dadurch gekennzeichnet, dass**
die Schnappfeder (11) bogenförmig ausgestaltet ist, wobei ein erstes Ende (15) des Bogens mit der Trägerplatte (9) verbunden ist und an dem zweiten Ende (16) des Bogens die Rastnase (12) angeordnet ist.

2. Zellkontaktieranordnung nach Anspruch 1, **dadurch gekennzeichnet, dass** die Schnappfeder (11) und die Rastnase (12) integral mit der Trägerplatte (9) gefertigt sind.

3. Zellkontaktieranordnung nach einem der vorhergehenden Ansprüche, **dadurch gekennzeichnet, dass** pro Anschlussterminal (3, 4), das vom Zellverbinder (10) kontaktiert ist, eine Schnappfeder (11) mit einer Rastnase (12) vorgesehen ist.

4. Zellkontaktieranordnung nach einem der vorhergehenden Ansprüche, **dadurch gekennzeichnet, dass** der Zellverbinder (10) an der der Schnappfeder (11) gegenüberliegenden Seite unter einen Absatz (17) der Trägerplatte (9) geschoben ist.

5. Zellkontaktieranordnung nach einem der vorhergehenden Ansprüche, **dadurch gekennzeichnet, dass** der Zellverbinder (10) Anschlussflächen (19) aufweist die zur Verbindung mit den Anschlussterminals (3, 4) ausgebildet sind.

6. Zellkontaktieranordnung nach einem der vorhergehenden Ansprüche, **dadurch gekennzeichnet, dass** die Rastnase (12) eine Bewegung des Zellverbinders (10) in einer ersten Richtung (13) blockiert, und dass die Schnappfeder (11) eine federbelastete Bewegung des Zellverbinders (10) in einer zur ersten Richtung (13) senkrechten zweiten Richtung (14) zulässt.

7. Zellkontaktieranordnung nach Anspruch 6, **dadurch gekennzeichnet, dass** die Anschlussfläche (19) als Platte ausgestaltet ist, wobei sich die zweite Richtung (14) senkrecht zur Richtung der Dicke (20) der Platte erstreckt.

8. Zellkontaktieranordnung nach einem der Ansprüche 6 oder 7, **dadurch gekennzeichnet, dass** die Anschlussflächen (19) des Zellverbinders (10) für die zu verbindenden Anschlussterminals (3, 4) hintereinander in einer dritten Richtung (21) angeordnet sind, wobei die dritte Richtung (21) senkrecht zur zweiten Richtung (14) steht.

9. Zellkontaktieranordnung nach einem der vorhergehenden Ansprüche, **dadurch gekennzeichnet, dass** der Zellverbinder (10) zwischen zwei Anschlussflächen (19) einen Verbindungsbogen (18) zum Ausgleich von Eigenspannungen im Zellverbinder (10) umfasst.

10. Hochvoltspeicher zur Spannungsversorgung, insbesondere eines Kraftfahrzeugs, umfassend:
- ein Energiespeichermodul (1) mit mehreren elektrochemischen Speicherzellen (2), wobei jede Speicherzelle (2) zumindest zwei elektrische Anschlussterminals (3, 4) aufweist, und
- eine Zellkontaktieranordnung (8) nach einem der vorhergehenden Ansprüche.

## Claims

1. Cell contacting arrangement (8) for an energy storage module (1) having multiple electrochemical cells (2), wherein each storage cell (2) comprises at least two electrical connection terminals (3, 4), said cell contacting arrangement comprising:
- a carrier plate (9) that can be placed on the energy storage module (1), and
- at least one cell connector (10) that can be inserted into the carrier plate (9) so as to connect at least two of the connection terminals (3, 4) of different storage cells (2),
- wherein the carrier plate (9) comprises at least one catch spring (11) having a latching lug (12) for fixing the cell connector (10) in the carrier plate (9),
**characterized in that**
the catch spring (11) is embodied as bow-shaped, wherein a first end (15) of the bow is connected to the carrier plate (9) and the latching lug (12) is arranged on the second end (16) of the bow.

2. Cell contacting arrangement according to Claim 1, **characterized in that** the catch spring (11) and the latching lug (12) are integrally produced with the carrier plate (9).

3. Cell contacting arrangement according to any one of the preceding claims, **characterized in that** one catch spring (11) is provided with a latching lug (12) for every connection terminal (3, 4) that is contacted by the cell connector (10).

4. Cell contacting arrangement according to any one of the preceding claims, **characterized in that** the cell connector (10) on the side that lies opposite the catch spring (11) is pushed below a shoulder (17) of the carrier plate (9).

5. Cell contacting arrangement according to any one of the preceding claims, **characterized in that** the cell connector (10) comprises connecting surfaces (19) that are embodied so as to connect to the connection terminals (3, 4).

6. Cell contacting arrangement according to any one of the preceding claims, **characterized in that** the latching lug (12) blocks a movement of the cell connector (10) in a first direction (13), and that the catch spring (11) permits a spring-loaded movement of the cell connector (10) in a second direction (14) that is perpendicular to the first direction (13).

7. Cell contacting arrangement according to Claim 6, **characterized in that** the connection surface (19) is embodied as a plate, wherein the second direction (14) extends perpendicular to the direction of the thickness (20) of the plate.

8. Cell contacting arrangement according to any one of the claims 6 or 7, **characterized in that** the connection surfaces (19) of the cell connector (10) are arranged one behind the other in a third direction (21) for the connection terminals (3, 4) that are to be connected, wherein the third direction (21) stands perpendicular to the second direction (14).

9. Cell contacting arrangement according to any one of the preceding claims, **characterized in that** the cell connector (10) comprises a connecting bow (18) between two connection surfaces (19) for compensating for internal stresses in the cell connector (10).

10. High voltage energy storage device for supplying a voltage, in particular a high voltage energy storage device of a motor vehicle, said high voltage energy storage device comprising:
- an energy storage device module (1) having multiple electrochemical storage cells (2), wherein each storage cell (2) comprises at least two electrical connection terminals (3, 4), and
- a cell contacting arrangement (8) according to any one of the preceding claims.

## Revendications

1. Système de mise en contact d'éléments (8) pour un module accumulateur d'énergie (1) avec plusieurs éléments accumulateurs (2) électrochimiques, dans lequel chaque élément accumulateur (2) présente au moins deux bornes de connexion électrique (3, 4), comprenant :
- une plaque de support (9) pouvant être posée sur le module accumulateur d'énergie (1), et
- au moins un connecteur d'éléments (10) inséré dans la plaque de support (9) pour raccorder au moins deux des bornes de connexion (3, 4) d'éléments accumulateurs (2) différents,
- dans lequel la plaque de support (9) comprend au moins un ressort à déclic (11) avec un ergot d'encliquetage (12) pour la fixation du connecteur d'éléments (10) dans la plaque de support (9),
**caractérisé en ce que**
le ressort à déclic (11) est réalisé en forme d'arc, dans lequel une première extrémité (15) de l'arc est raccordée à la plaque de support (9) et l'ergot d'encliquetage (12) est disposé au niveau de la deuxième extrémité (16) de l'arc.

2. Système de mise en contact d'éléments selon la revendication 1, **caractérisé en ce que** le ressort à déclic (11) et l'ergot d'encliquetage (12) sont fabriqués d'un seul tenant avec la plaque de support (9).

3. Système de mise en contact d'éléments selon l'une des revendications précédentes, **caractérisé en ce qu'**est prévu, par borne de connexion (3, 4) avec laquelle le connecteur d'éléments (10) entre en contact, un ressort à déclic (11) avec un ergot d'encliquetage (12).

4. Système de mise en contact d'éléments selon l'une des revendications précédentes, **caractérisé en ce que** le connecteur d'éléments (10) est glissé sous un décrochement (17) de la plaque de support (9) au niveau du côté en regard du ressort à déclic (11).

5. Système de mise en contact d'éléments selon l'une des revendications précédentes, **caractérisé en ce que** le connecteur d'éléments (10) présente des surfaces de connexion (19) réalisées pour le raccordement aux bornes de connexion (3,4).

6. Système de mise en contact d'éléments selon l'une des revendications précédentes, **caractérisé en ce que** l'ergot d'encliquetage (12) bloque un déplacement du connecteur d'éléments (10) dans une première direction (13), et **en ce que** le ressort à déclic (11) autorise un déplacement contraint par ressort du connecteur d'éléments (10) dans une deuxième direction (14) perpendiculaire à la première direction (13).

7. Système de mise en contact d'éléments selon la revendication 6, **caractérisé en ce que** la surface de connexion (19) est réalisée en tant que plaque, dans lequel la deuxième direction (14) s'étend perpendiculairement à la direction de l'épaisseur (20) de la plaque.

8. Système de mise en contact d'éléments selon l'une des revendications 6 ou 7, **caractérisé en ce que** les surfaces de connexion (19) du connecteur d'éléments (10) pour les bornes de connexion (3, 4) à raccorder sont disposées les unes derrière les autres dans une troisième direction (21), dans lequel la troisième direction (21) est perpendiculaire à la deuxième direction (14).

9. Système de mise en contact d'éléments selon l'une des revendications précédentes, **caractérisé en ce que** le connecteur d'éléments (10) comprend, entre deux surfaces de connexion (19), un arc de liaison (18) pour compenser des contraintes internes dans le connecteur d'éléments (10).

10. Batterie haute tension pour l'alimentation électrique, en particulier d'un véhicule automobile, comprenant :
- un module accumulateur d'énergie (1) avec plusieurs éléments accumulateurs (2) électrochimiques, dans laquelle chaque élément accumulateur (2) présente au moins deux bornes de connexion électrique (3, 4), et
- un système de mise en contact d'éléments (8) selon l'une des revendications précédentes.
